# EUROPEAN PATENT APPLICATION

(11) **EP 1 434 363 A1**
(43) Date of publication of application: **30.06.2004**
(21) Application number: 02293236.2
(22) Date of filing: 24.12.2002
(51) Int. Cl.: H04B 3/23, H04L 27/26

(54) **Efficient echo canceller and method**

(71) Applicant: ALCATEL, 75008 Paris (FR)
(72) Inventor: Van Hoogenbemt, Stefaan Margriet Albert, 2800 Mechelen (BE)
(74) Representative: Plas, Axel

(57) **Abstract**

An adaptive echo canceller for use in a telecommunications system is described which comprises a counter for counting time domain blocks of data of a received signal, e.g. of a received multicarrier signal. The time domain blocks are transformed into a frequency domain representation thereof, e.g. by means of a Fast Fourier transform. Responsive to receipt of the specific block of data, transforming of the specific block is prevented. During this time adaptive coefficients for echo canceling can be determined.

## Description

### FIELD OF THE INVENTION

This invention relates to circuits and methods for echo cancellers for use with dispersive channels in a telecommunications system as well as to receivers and transmitters having such circuits, to modems having such receivers and/or transmitters, to central office equipment having such modems, to signal processors, to corresponding software and methods, and to methods of offering a communication service over networks having such receivers and/or transmitters, especially for multi-carrier telecommunications systems in which a signal is transmitted and received over a dispersive channel.

### BACKGROUND TO THE INVENTION

Both single carrier (SCM) and multicarrier (MCM) modulation schemes are known for telecommunications networks. Asymmetric high speed Digital Subscriber Line (ADSL) and Very high speed Digital Subscriber Line (VDSL) are examples of multi-carrier modem communication systems which permit transmission of data over band-limited communication lines at very high rates, e.g., up to 52 Mbits/s. Reference is made to "ADSL, VDSL and Multicarrier Modulation", J. A. C. Bingham, Wiley, 2000, especially sections 4.2.1, 8.3.3 and 11.3. Multi-carrier modulation is a means for transmitting digital data by splitting that data into fixed-length data "blocks" or "symbols" each having the same number of sub-blocks or bits. Analogue transmission of these blocks is carried out using a set of carrier signals. There is a carrier for each of the sub-blocks in one block. The carriers have frequencies which are equally spaced across the transmission band of the transceiver. One such arrangement is called DMT (Discrete multi-tone). DMT modems transmit data by dividing it into several interleaved bit streams, and using these bit streams to modulate several carriers. Another application of multicarrier modulation is in OFDM systems, as described for instance in "OFDM for Wireless Multimedia Communications", R. van Nee and R. Prasad, Artech House, 2000, especially sections 2.1, 2.2, 2.3 and 2.6. Applications are for example, wireless LAN's. This modulation technique also finds application in Satellite communications, see for example, "Satellite Communications Systems", G. Maral, M. Bousquet, Wiley, 1998, especially section 9.4.2.1.

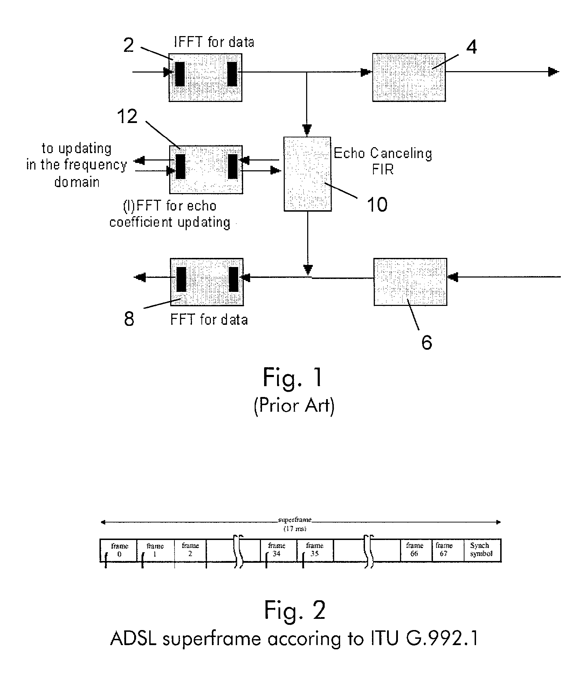

When operating a duplex system in which the frequency ranges for transmit and receive overlap and an echo canceller can be used to prevent the transmitted signal influencing the received signal at the near-end. Various combinations of frequency division (FDD) and echo canceling (EC) have been proposed, e.g.
(i) "pure echo canceling" which means the simultaneous use of the entire frequency band for transmission in both directions as used for example in HDSL;
(ii) EC/FDD with duplex transmission up to some frequency and then simplex beyond that frequency, as proposed for HDSL2 and also as one option in ADSL with only downstream above a frequency of 138 kHz;
(iii) FDD(EC) which uses FDD but employs EC instead of filters to separate the transmitted and received signals.
Also various types of echo canceller have been proposed. The conventional echo canceller operates in the time domain, e.g. using a tapped delay line - see for example "The theory and practice of Modem Design", J.A.C. Bingham, Wiley, 1988, especially section 11.2. The coefficients for the delay line filter can be adapted automatically. An alternative method is to carry out echo canceling in the frequency domain. Still a further design is proposed in US 5,317,596 in which there is a frequency domain and a time domain part of the echo canceller. Another type of echo canceller in which there is a frequency domain and a time domain part, determines updated coefficients for a time domain equaliser in the frequency domain as shown schematically in Fig. 1. Data is transmitted on a block-by-block basis. A stream of binary data is converted into N sub-blocks each of which comprises a variable number of bits. Each sub-block is converted into a two-dimensional vector of complex integers. Each of the N complex integers is modulated by N carriers in an inverse Fourier transformer (IFFT) 2 to generate N time domain samples. This time domain signal is processed further in block 4, e.g. the last L samples, called the cyclic prefix, are copied and prepended to the beginning of the block, followed by converting the parallel N+L vector to a serial sequence of time domain signals for transmission. The inverse process is carried out on the receive side in blocks 6 and 8. An echo canceller with a time domain part 10 cancels the portion of the transmitted signal which echoes back on the receive side. The echo canceller 10 has a frequency domain part, e.g. a block 12 for determining the updated coefficients for the echo canceller 10. Block 12 will typically require an IFFT and/or FFT, e.g. an FFT transform is made of the coefficients, followed by adaption and then an IFFT transform.

One problem with operating an echo canceller in which there is a time domain echo canceller with frequency domain coefficient updating is that means 2, 8 as well as means 12 are required for carrying out (inverse) fast Fourier transforms. This increases the cost of the modem making it less competitive with the FDD ADSL option using filters to separate the frequency bands.

### SUMMARY OF THE INVENTION

It is an aim of the present invention to provide improved apparatus and methods for single carrier or multicarrier telecommunications systems and elements thereof.

According to a first aspect of the present invention, there is provided an adaptive echo canceller for use in a telecommunications system, the echo canceller comprising:
means for determining receipt of a specific block of data having a duration in a series of time domain blocks of data of a received signal and for outputting an output signal when the specific block of data has been received;
means for transforming time domain blocks of data into a frequency domain representation thereof; and
means responsive to the output signal to prevent processing of the specific block by the means for transforming.

The determining means may be a counter for counting time domain blocks of data of a received signal. By interrupting the processing of the received signal resources in the receiver chain are made free for other duties.

The echo canceller may be adapted to use the means for transforming for transforming frequency domain parameters for adaption of the echo canceller during the duration of the specific block. This provides the specific advantage that two transforming units are not required.

A memory may be linked to the transforming means for use when processing the received signal and this memory may be used by the means for transforming during the provision and transforming of the frequency domain parameters. This provides the advantage that extra memory is not required.

The specific block of data may be a synchronization symbol. This has the advantage that such a symbol does not contain useful data.

Typically the means for transforming is arranged to carry out Fourier transform based operations but other transforms are possible.

The present invention includes a receiver having a demodulator for recovering data from an input signal, and the above adaptive echo canceller. The receiver may also include an equalizer.

The present invention also provides a chip set comprising the receiver.

The present invention also includes a method of adaptive echo canceling for use in a telecommunications system, the method comprising:
transforming received time domain blocks of data into a frequency domain representation thereof;
determining when a specific block of data has been received, and
on determining the receipt, preventing transforming of the specific block.

Another aspect of the invention provides software for implementing the method above Another aspect provides a method of offering a communication service over a network using the receiver described above. As the advantages set out above can feed through to enable a better network, in which modems are more economical despite providing the additional functionality of an echo canceller. Any of the features can be combined with any of the aspects of the invention as would be apparent to those skilled in the art. Other advantages will be apparent to those skilled in the art.

### BRIEF DESCRIPTION OF THE DRAWINGS

To show by way of example how the invention can be implemented, embodiments will now be described with reference to the figures in which:
Fig 1 shows a modem having a time domain echo canceller with adaptive coefficients being determined in the frequency domain.
Fig. 2 shows a framing for a multicarrier modulated system in accordance with ITU G.992.1
Fig. 3 shows an embodiment in the form of a modem having means for prenting processing of at least one received symbol in the time domain and to change the function of the FFT unit in the receive path.

### DETAILED DESCRIPTION OF PREFERRED EMBODIMENTS

The present invention will be described with reference to certain drawings and embodiments but these are provided by way of example only. The present invention may find wider application than these examples, e.g. as indicated in the attached claims. For example, the present invention may find application wherever echo canceling is required, e.g. in a satellite system, ADSL, HDSL, VDSL, xDSL, wireless LAN applications. Also the present invention is not limited to multicarrier systems but may also be used with single carrier systems using an echo canceller. The physical nature of the telecommunications channel is considered not limiting, e.g. air interface, cable, optical fibre, twisted pair, coax cable. Also where reference is made to Fourier transforms other transforms may be used. For example, discrete wavelet transforms and inverse transforms may be used as explained in the book by J. A. C. Bingham, Wiley 2000 mentioned above, especially section 7.4. The relationship between Fourier, wavelet and other transforms is explained in the book "Wavelets and Subbands", A. Abbate et al., Birkhäuser, 2002, especially sections 2.2, 2.3 and 2.4.

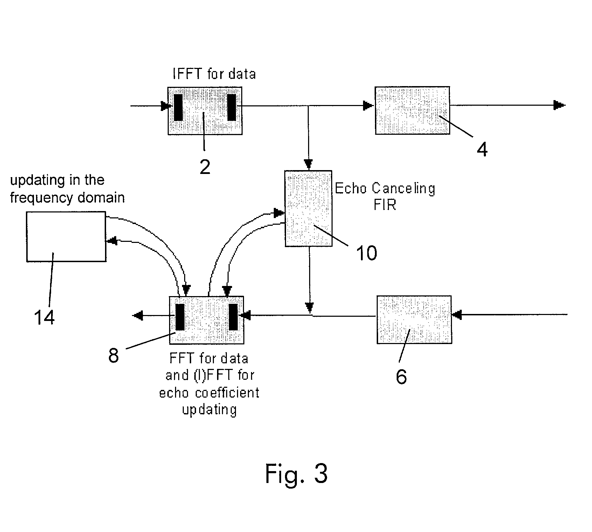

In Fig. 3, there is illustrated a modem having a discrete multi-tone (DMT) transceiver, which includes a receiver side, a transmit side and an echo canceller 10 according to embodiments of the present invention. The echo canceller 10 involves frequency domain operations. In particular echo canceling is adaptive using coefficients generated by an adaptation algorithm operated in the frequency domain.

In use the modem is incorporated in central office equipment and is coupled to a subscriber line for transmitting or receiving to or from consumer premises equipment. Embodiments of the present invention are equally applicable to a modem located at the CPE or in other types of multicarrier communications links such as cable connections, wireless links and so on.

The transmitter side will generally include a mapper for receiving data to be modulated and transmitted, and a signal output for outputting transmit signals to a digital-to-analog converter (DAC) for subsequent transmission (elements not shown). The receiver side will generally have a receive signal input for receiving signals transmitted from remote transceivers via an analog-to-digital converter (ADC), and a receive data output for outputting received data to a demapper (elements not shown).

In the transmitter side, an inverse fast Fourier transform unit (IFFT) 2 receives input data in the form of frequency-domain DMT data blocks comprised of N complex-valued data elements. The IFFT unit 2 modulates each of the N data elements with N carrier signals at evenly spaced frequency intervals thereby converting the N frequency-domain data elements into a block (or "symbol") of N real-valued time-domain samples. In the time domain, block 4 copies the last L samples of the N time-domain sample block to form a cyclic prefix therewith, and prepends the cyclic prefix to the beginning of the block. The cyclic prefix may also be placed at other positions in the data stream. This is done in order to reduce inter-block interference at the remote transceiver to which the block of (N+L) samples is subsequently transmitted. The DMT transmit signals are usually subsequently passed through a transmitter low-pass filter unit and thence through a digital-to-analogue converter prior to duplex transmission to a remote transceiver (elements not shown).

The receiver side input is usually coupled to an analogue-to-digital converter (ADC) arranged to digitise received DMT time-domain signals received from a remote transceiver, and to pass those signals, so digitised, through a receiver filter (elements not shown).

Optionally, block 6 may comprise a time domain equalizer to produce DMT signals in which the effect of the length of the dispersive channel is removed or suppressed. In particular the equalizer suppresses the effect of the dispersive channel so that energy from one symbol is spread only into the associated CP and not significantly beyond. This allows a CP-symbol combination to be deleted without deleting information relevant to other symbols.

The inverse process to that in the transmit is continued by the FFT unit 8 which transforms the time-domain samples into frequency domain samples. In one aspect of the present invention one or more symbols are not processed by the Fast Fourier transform unit 8 and during this idle time the FFT unit 8 is used to process the coefficients for the adaptive echo canceller 10. In particular the FFT unit 8 may be used for calculating Fourier transforms required by a unit 14 for determining the adaptive coefficients in the frequency domain which will be used by the time domain echo canceller 10 once these have been transformed into the time domain. The selection of which received sample should not be transformed in block 8 depends on the MCM protocol used. For example, a framing for upstream and downstream traffic as defined in the standard ITU G.992.1 is shown in Fig. 2. Every 69 symbols there is a "synch symbol". That is there are 68 DMT symbols carrying useful data and one synchronization DMT symbol. This symbol was originally designed for use in synchronization, in particular to make use of the pilot tone for synchronization. However, other methods of synchronization and tracking are available - see for example the book van Nee and Prasad above, especially chapter 4 - so that this symbol does not need to be processed. The pilot can be tracked every symbol without use of the synchronization symbol. The loss of this tracking procedure for one symbol in 69 is not considered to cause a problem. A means for identifying symbols is provided, e.g. a symbol counter is provided in the modem to count the received symbols and to identify the position of the 69^{th} symbol. On receipt of a signal from the counter that the 69^{th} has been reached the modem is adapted to switch the function of block 8 to determining the coefficients of the echo canceller 10 or for any other function required by the modem The length of the symbol is 250 microseconds. During this time the function of block 8 is changed to determining the coefficients of the echo canceller 10 or for any other function required by the modem. By this means, the need for an additional FFT unit 12 as shown in Fig. 1 is avoided. Further, memory, e.g. both time domain and frequency buffers, associated with FFT unit 12 is also idle and can therefore also be used for other purposes, e.g. can be used in the determination of the adaptive coefficients of the echo canceller. Hence, no extra memory is required.

Where a time domain equalizer is used, the synchronization symbol is first processed thereby before reaching the FFT unit 8. Thus, any spread from this symbol is contained in the CP that is removed. Hence, processing of symbols on either side of the synchronization symbol is not affected. In fact all functions following the time domain equalizer can be avoided.

The present invention may be implemented in a chip set such as in an Application Specific Integrated Circuit (ASIC). The present invention circuit may be implemented as a VLSI chip around an embedded microprocessor such as an ARM7TDMI core designed by ARM Ltd., UK which may be synthesized onto a single chip with the other components shown. The present invention also includes software for running on an embedded processor such the ARM processor mentioned above and which contains code which implements any of the methods of the present invention when executed on a computing device. The present invention also includes a data carrier storing the software code.

Other variations will be apparent to those skilled in the art, having corresponding advantages to those set out above, within the scope of the claims.

## Claims

1. An adaptive echo canceller (10) for use in a telecommunications system, the echo canceller (10) comprising:
means for determining receipt of a specific block of data having a duration in a series of time domain blocks of data of a received signal and for outputting an output signal when the specific block of data has been received;
means (8) for transforming time domain blocks of data into a frequency domain representation thereof; and
means responsive to the output signal to prevent processing of the specific block by the means for transforming.

2. The adaptive echo canceller (10) of claim 1, wherein the echo canceller (10) is adapted to use the means for transforming (8) to transform frequency domain parameters for adaption of the echo canceller (10) during the duration of the specific block.

3. The adaptive echo canceller of claim 2, further comprising a memory used by the means for transforming (8) during the transformation of the frequency domain parameters.

4. The adaptive echo canceller according to any previous claim, wherein the specific block of data is a synchronization symbol.

5. The adaptive echo canceller of any of the previous claims, wherein the means for transforming (8) is arranged to carry out Fourier transform based operations.

6. The adaptive echo canceller of any previous claim, wherein the received signal is a multicarrier modulated signal.

7. A method of adaptive echo canceling for use in a telecommunications system, the method comprising:
transforming received time domain blocks of data into a frequency domain representation thereof;
determining when a specific block of data has been received, and
on determining the receipt, preventing transforming of the specific block.

8. The method of claim 7, further comprising providing parameters for time domain adaptive echo canceling from frequency domain parameters during the duration of the specific block.

9. The method according to claim 7 or 8, wherein the specific block of data is a synchronization symbol.

10. The method of any of the claims 7 to 9, wherein transforming is carrying out Fourier transform based operations.

11. A receiver having a demodulator for recovering data from an input signal, and the adaptive echo canceller of any of the claims 1 to 5.

12. A receiver according to claim 11, further comprising an equalizer.

13. A chip set comprising the receiver of claim 11 or 12.

14. A modem having the receiver of claim 11 or 12 and a transmitter.

15. Central office equipment having one or more of the modems of claim 14, each for coupling a subscriber line to a telecommunications network.
